# EUROPÄISCHE PATENTSCHRIFT

(11) **EP 4 638 100 B1**
(45) Veröffentlichungstag und Bekanntmachung des Hinweises auf die Patenterteilung: **30.09.2026**
(21) Anmeldenummer: 23817064.1
(22) Anmeldetag: 29.11.2023
(51) Int. Cl.: B29C 70/38, B29C 53/80

(54) **WICKELMASCHINE ZUR HERSTELLUNG EINES BAUTEILS AUS FASERVERSTÄRKTEM KUNSTSTOFF**
WINDING MACHINE FOR PRODUCING A COMPONENT COMPOSED OF FIBER-REINFORCED PLASTIC
MACHINE D'ENROULEMENT POUR LA FABRICATION D'UN COMPOSANT EN PLASTIQUE RENFORCÉ PAR DES FIBRES

(30) Priorität: 20.12.2022 DE 102022134002
(43) Veröffentlichungstag der Anmeldung: 29.10.2025
(73) Patentinhaber: Voith HySTech GmbH, 85748 Garching (DE)
(72) Erfinder: TRANSIER, Gordon, 85375 Neufahrn (DE); BLEISCHWITZ, Mark, 81245 München (DE); WESSELS, Lukas, 85653 Aying (DE); BRÜHLER, Jürgen, 85716 Unterschleißheim (DE)
(74) Vertreter: Voith Patent GmbH - Patentabteilung
(86) Internationale Anmeldenummer: PCT/EP2023/083494
(87) Internationale Veröffentlichungsnummer: WO 2024/132420

(56) Entgegenhaltungen:
- EP-A1- 1 342 555
- US-A- 4 869 761

## Beschreibung

Die Erfindung betrifft eine Wickelmaschine und ein Verfahren zum Herstellen eines Bauteils aus faserverstärktem Kunststoff durch gleichzeitiges Wickeln von mehreren Faserbändern auf einen Wickelkern. Solche Bauteile sind beispielsweise Drucktanks für Fahrzeuge, in denen Gas insbesondere Wasserstoff bei einem Druck von mehreren Hundert bar, insbesondere bei bis zu 800 bar gespeichert wird, und die aus Kohlenstofffaser-verstärktem Kunststoff (CFK) gefertigt sind.

Eine solche Wickelmaschine umfasst
- einen Wickelkern mit Antrieb, der den Wickelkern in Rotation versetzen kann,
- ein Fadenauge, welches mehrere Umlenkrollen, eine Führungsrolle zum Führen der Faserbänder vor dem Wickeln auf den Wickelkern, sowie eine Tragstruktur umfasst, wobei das Fadenauge mit seinen Rollen derart um eine Drehachse kippbar ist, dass die Positionsebene des Fadenauges im Winkel a einstellbar ist, um damit den Wickelwinkel b, unter dem die Faserbänder auf den Wickelkern gewickelt werden, verändern zu können,
- mehrere Zuführrollen, die in Laufrichtung der Faserbänder vor dem Fadenauge angeordnet sind, und die die Faserbänder umlenken und zum Fadenauge führen,
- mehrere Spulen, von denen die Faserbänder abgewickelt werden.

Üblicherweise werden solche gewickelten faserverstärkten Kunststoff-Bauteile, wie etwa Drucktanks für Fahrzeuge, im sogenannten Nasswickelverfahren hergestellt. Dabei werden die Faserbänder trocken auf Spulen aufgewickelt bereitgestellt. Als Fasern werden bevorzugt Kohlenstofffasern in Form von Endlosfasern verwendet. Die einzelnen Faserbänder sind beispielsweise Rovings, die aus mehreren Tausend parallelen Einzelfasern bestehen. Als Matrixmaterial wird ein Duromer, zum Beispiel Epoxy-Harz, verwendet, das als Flüssigkeit in einem Harzbad zur Verfügung steht, um die Faserbänder online zu imprägnieren. Nach dem Abwickeln von der Spule werden die noch trockenen Faserbänder zunächst durch das Harzbad geführt, in welchem sie mit dem flüssigen Matrixmaterial getränkt und damit imprägniert werden, dann werden die imprägnierten Faserbänder durch das Fadenauge geführt und auf den Wickelkern nass-in-nass gewickelt. Durch die Veränderung des Winkels der Positionsebene des Fadenauges können verschiedene Lagen unter verschiedenen Winkel gewickelt werden. So können verschiedene Anforderungen an das Wickeldesign umgesetzt werden. Nach dem Wickeln wird das Bauteil aus der Wickelmaschine herausgenommen und in einem separaten Ofen ausgehärtet.

Im Stand der Technik sind solche Wickelmaschinen bekannt. In der DE 102016122522 A1 ist eine Wickelmaschine zum Nasswickeln beschrieben. Eine weitere Ausführung für eine Wickelmaschine ist in der WO 2022/136812 A1 gezeigt. In deren Fig.2 ist eine Variante eines Fadenauges mit Führungsrolle und Umlenkrollen für vier Faserbänder gezeigt. Je zwei Faserbänder werden hier mit seitlichem Abstand zueinander gemeinsam über jeweils zwei Umlenkrollen geführt. Erst auf der Führungsrolle, welche die letzte Rolle kurz vor dem Wickeln auf den Wickelkern darstellt, werden die Faserbänder alle zusammengeführt, so dass ein geschlossenes, breites Band gebildet wird, welches auf den Wickelkern aufgewickelt wird. Die Rollen des Fadenauges sind an einer Tragstruktur befestigt und können um eine Drehachse gekippt werden, so dass das breite Band unter dem gewünschten Winkel auf den Wickelkern gewickelt wird. Durch die Kippung werden die Faserbänder zwischen den feststehenden Spulen beziehungsweise ebenfalls feststehenden Zuführrollen oder Rollenblöcken vor dem Fadenauge und den gekippten Rollen des Fadenauges verdrillt geführt. Damit die Faserbänder durch die dabei auftretenden Querkräfte nicht verschoben werden, weisen die Rollen des Fadenauges Nuten auf, in denen die Faserbänder geführt und gegen seitliches Verrutschen gesichert sind.

US 4 869 761 A offenbart die Merkmale des Oberbegriffs des Anspruchs 1.

Durch das Nass-in-nass-Wickeln werden eventuelle Fehlstellen im Bauteil vermieden, selbst wenn der Wickelvorgang dazu führt, dass die Faserbänder nicht ganz exakt nebeneinander liegen. Weil das noch flüssige Matrixmaterial alle Zwischenräume gut ausfüllt und die Fasern sich im Matrixmaterial noch etwas bewegen können, ergibt sich unter dem radialen Druck der Faserspannung beim Wickelprozess eine gute und gleichmäßige Verteilung von Fasern und Matrixmaterial, so dass keine Qualitätsprobleme auftreten.

Ein aktuelles Problem dieser Wickelmaschinen ist allerdings, dass die Produktivität begrenzt ist. Zum einen lässt die Online-Imprägnierung im Harzbad und das Wickeln von nassen Faserbändern keine höheren Geschwindigkeiten zu, da sonst die Imprägnierung nicht gleichmäßig wird oder das Matrixmaterial spritzt. Und zum anderen können nicht noch mehr Faserbänder parallel gleichzeitig zu einem breiten Band zusammengeführt und gemeinsam gewickelt werden, weil dann die Qualität des Bauteils darunter leidet.

Vor allem bei den oben genannten Drucktanks für Fahrzeuge ist keine Verschlechterung der Qualität akzeptabel, da diese Drucktanks sehr hohen Sicherheitsanforderungen genügen müssen und gleichzeitig möglichst leicht und mit wenig Materialaufwand gefertigt werden sollen. Zudem muss die Fertigung zuverlässig und möglichst kostengünstig erfolgen.

Die Aufgabe der Erfindung ist es nun, eine Wickelmaschine bereit zu stellen, welche eine höhere Produktivität ermöglicht, und gleichzeitig die Qualität der hergestellten Bauteile zuverlässig verbessert - bei möglichst geringem Materialeinsatz.

Die Aufgabe wird für die Vorrichtung erfindungsgemäß durch eine Ausführung entsprechend dem unabhängigen Anspruch 1 gelöst. Weitere vorteilhafte Ausführungsformen der vorliegenden Erfindung finden sich in den Unteransprüchen.

Die erfindungsgemäße Ausführung der Wickelmaschine zeichnet sich dadurch aus, dass zusätzlich Zwischenrollenpaare vorhanden sind, die in Laufrichtung der Faserbänder vor den Zuführrollen angeordnet sind und deren Achsen nicht parallel zu den Achsen der Zuführrollen ausgerichtet sind, wobei je Faserband jeweils ein Zwischenrollenpaar vorgesehen ist, und wobei die Zuführrollen und die Zwischenrollenpaare so mit dem Fadenauge verbunden sind, dass sie um dessen Drehachse mitkippen, wenn der Winkel α des Fadenauges verändert wird, wobei die Achsen der Zuführrollen dabei immer parallel zu den Achsen der Umlenkrollen bleiben.

Die Rollen der Zwischenrollenpaare sind alle zueinander parallel angeordnet. Ebenso sind die Zuführrollen zueinander parallel angeordnet.

Im Fadenauge sind die Führungsrolle und die Umlenkrollen parallel zueinander ausgerichtet. Sie sind an einer Tragstruktur des Fadenauges gelagert und werden bei einer Kippung des Fadenauges mitgekippt.

Die Faserbänder werden erst auf der Führungsrolle zu einem breiten lückenlosen Band zusammengeführt und dann auf den Wickelkern gewickelt. Auf den Umlenkrollen werden jeweils nur ein Teil der Faserbänder mit entsprechenden Lücken zwischen den jeweiligen Faserbändern geführt. So ist gewährleistet, dass die Faserbänder gut und gleichmäßig gespreizt werden und nicht am Rand miteinander verkleben, bevor sie auf dem Wickelkern abgelegt werden.

Durch die so ausgeführte Anordnung können insbesondere auch sogenannte Towpregs als Faserbänder gut verarbeitet werden. Towpregs sind mit Matrixmaterial imprägnierte Faserbänder, die auf Spulen aufgewickelt bereitgestellt werden. Das Matrixmaterial ist in bei Raumtemperatur im Wickelprozess ein sehr zähes, etwas klebriges Harz und nicht so dünnflüssig wie das bekannte Harz, welches für die Online-Imprägnierung im temperierten Harzbad verwendet wird. Durch das zähe Harz lassen sich die Towpreg-Faserbänder von der Spule gut abwickeln und über die Rollen führen. Die Verarbeitung und das Wickeln des Bauteils können bei deutlich höherer Geschwindigkeit erfolgen.

Andererseits führt das sehr zähe Harz dazu, dass eventuelle Fehlstellen und Faserüberlappungen beim Wickeln nicht so einfach von selbst ausgeglichen werden. Das heißt für das Wickeln, dass die Faserbänder exakter in der richtigen Position geführt werden müssen, weil sich die Fasern im Faserverbund nicht mehr verschieben können. So werden Lücken oder unerwünschte Überlappungen zwischen den Faserbändern nicht mehr von alleine beim Überwickeln ausgeglichen, wie es beim Nass-in-Nass-Wickeln aufgrund des flüssigen Harzes noch der Fall war. In diesem Zusammenhang ist es besonders nachteilig, dass in den bisher bekannten Wickelmaschinen wie beschrieben wechselnde Querkräfte auftreten, die zu einer leichten seitlichen Verschiebung der Faserbänder führen und damit bei Verwendung von Towpregs immer wieder Fehlstellen und eine unzuverlässige Wickelqualität verursachen. Die Querkräfte sind nicht konstant, sondern davon abhängig, an welcher Position in Querrichtung das Faserband läuft und wie stark das Fadenauge gegenüber der 0°-Ebene gekippt ist. Dazu kommt, dass die Verdrillung der Faserbänder sich ebenfalls abhängig vom Winkel des Fadenauges ändert. Je mehr Faserbänder nebeneinander gewickelt werden und je stärker das Fadenauge gekippt wird, umso größer sind die Qualitätsprobleme.

Diese Probleme können mit der erfindungsgemäßen Ausführung der Wickelmaschine komplett vermieden werden, was zu einer besseren und zuverlässigeren Wickelqualität im Bauteil führt. Dadurch dass die Zuführrollen und die Zwischenrollenpaare mit dem Fadenauge gekoppelt sind und mit diesem zusammen mitgekippt werden, wenn der Winkel α der Positionsebene des Fadenauges verändert wird, treten keine wechselnden Querkräfte auf die verschiedenen Faserbänder mehr auf. Die Faserbänder werden nur auf der Strecke zwischen den Zwischenrollenpaaren und den Zuführrollen jeweils um einen festen Winkel, bevorzugt um 90° umgelenkt. Bei einer Änderung des Winkels α des Fadenauges ändert sich die Verdrillung, also der Winkel, um den das Faserband gedreht wird, nicht - weder im Fadenauge noch auf der Zuführstrecke. Es ändert sich nur die Länge der Laufstrecke zwischen den Spulen und den Zwischenrollenpaaren. Von den Zuführrollen durch das Fadenauge - über die Umlenkrollen bis zur Führungsrolle - werden die Faserbänder keinen Querkräften mehr ausgesetzt. So können die Faserbänder alle gleichmäßig gespreizt und exakt nebeneinander geführt werden, so dass sie sehr positionsgenau auf dem Wickelkern abgelegt werden. Auch mit dem zähen Matrixmaterial der Towpregs gibt es somit keine Qualitätsrisiken. Zudem kann die Wickelgeschwindigkeit ohne Nachteile deutlich erhöht werden.

Damit ergibt sich durch die erfindungsgemäße Ausführung ein enormer Vorteil in Bezug auf Produktivitätssteigerung, Zuverlässigkeit und Qualitätsverbesserung gegenüber bekannten Wickelmaschinen, bei denen die Zuführrollen vor dem Fadenauge feststehend als sogenannten Rollenblöcke ausgeführt sind. Mit feststehend ist hier gemeint, dass die Achsausrichtung dieser Rollenblöcke parallel zur Drehachse bleibt, wenn das Fadenauge gekippt wird.

Besonders vorteilhaft ist neben der verbesserten Produktivität, dass durch die erhöhte Zuverlässigkeit und Qualität bei der Ablage auf dem Wickelkern weniger Materialaufwand nötig ist und weniger Ausschuss anfällt, so dass die Herstellkosten deutlich reduziert werden können. Zudem können auch kompliziertere Wickeldesigns zuverlässig und mit hoher Qualität und bei hoher Produktionsgeschwindigkeit hergestellt werden.

Insbesondere ist die Wickelmaschine so ausgeführt, dass sie mindestens 8, bevorzugt mindestens 10, besonders bevorzugt mindestens 12 Faserbänder parallel verarbeiten und in einem breiten Band auf den Wickelkern wickeln kann. Dadurch dass keine Querkräfte auf die Faserbänder im Fadenauge mehr auftreten, können mehr Faserbänder parallel verarbeitet werden, ohne dass Qualitätsprobleme durch Lücken oder unerwünschte Überlappungen auftreten. Das steigert die Produktivität noch einmal.

Bei bisher bekannten Wickelmaschinen ist das so nicht möglich, weil besonders bei einer großen Kippung des Fadenauges beispielsweise um +70° oder -70°, wie es zum Wickeln von Low Angle Helicals (kleiner Wickelwinkel β) nötig ist, die äußeren Faserbänder auf den Rollen des Fadenauges großen wechselnden Querkräften ausgesetzt wären, was zu erheblichen Qualitätsschwankungen führen würde.

Insbesondere ist die Wickelmaschine so ausgeführt, dass das Fadenauge mindestens in einem Winkelbereich α von +70° bis -70° um die Drehachse herum gekippt werden kann. Die 0°-Position des Fadenauges ist die Position, in der die Achse der Führungsrolle des Fadenauges parallel zur Wickelachse des Wickelkerns ausgerichtet ist. In dieser Position werden die Faserbänder als Umfangswicklung auf den Wickelkern gewickelt. Man spricht hier von 90°-Lagen oder Hoop-Lagen - bezogen auf den Wickelwinkel β. Je größer der Winkel α der Kippung des Fadenauges ist, umso flacher wird der Wickelwinkel β. Hier spricht man dann von Helical-Lagen.

Besonders bevorzugt sind die Achsen der Zwischenrollenpaare parallel zur Drehachse des Fadenauges angeordnet. In dieser Ausführung stehen die Zwischenrollenpaare dann jeweils senkrecht versetzt zu den Zuführrollen. So werden die Faserbänder auf der Laufstrecke zwischen den Zwischenrollenpaaren und den Zuführrollen konstant um 90° verdrillt. Und das ist unabhängig von der Kippung des Fadenauges und bleibt bei jedem Winkel α gleich.

Weiterhin ist es von Vorteil, wenn einige der Spulen oberhalb und die anderen Spulen unterhalb des Fadenauges angeordnet sind, insbesondere wenn die eine Hälfte der Spulen oberhalb und die andere Hälfte der Spulen unterhalb des Fadenauges angeordnet sind. Dadurch können die Spulen platzsparend angeordnet werden, was vor allem bei einer größeren Anzahl von Spulen wichtig ist.

In einer vorteilhaften Weiterentwicklung dieser Ausführung gibt es erste Zuführrollen und zweite Zuführrollen, wobei die ersten Zuführrollen die Faserbänder von den Spulen oberhalb des Fadenauges umlenken und die zweiten Zuführrollen die Faserbänder von den Spulen unterhalb des Fadenauges umlenken, und wobei die ersten Zuführrollen in der 0°-Position des Fadenauges oberhalb der zweiten Zuführrollen angeordnet sind.

Des Weiteren gibt es vorteilhafterweise erste Zwischenrollenpaare, die in der 0°-Position oberhalb der Zuführrollen, und zweite Zwischenrollenpaare, die in der 0°-Position unterhalb der Zuführrollen angeordnet sind. Wobei die ersten Zwischenrollenpaar die Faserbänder von den Spulen oberhalb des Fadenauges und die zweiten Zwischenrollenpaare die Faserbänder von den Spulen unterhalb des Fadenauges umlenken.

Das ermöglicht eine platzsparende Ausführung der Wickelmaschine.

Bevorzugt gibt es in der Laufstrecke zwischen den jeweiligen Spulen und den Zwischenrollenpaaren für jedes Faserband eine Abwickelrolle. Diese Abwickelrollen sind parallel zu den Zwischenrolllenpaaren ausgerichtet. Dadurch werden die Faserbänder vor den Zwischenrollenpaaren unverdrillt geführt, so dass auch bei einer Änderung der Laufstrecke zwischen Abwickelrolle und Zwischenrollenpaar durch eine Kippung des Fadenauges kein negativer Einfluss auf die Faserbänder wirkt. Die Verdrillung zwischen Spule und Abwickelrolle bleibt somit konstant und unabhängig von der Kippung des Fadenauges. Beispielsweise können die Spule wiederum um 90° gekippt zu den Abwickelrollen angeordnet sein. Somit lassen sich die Spulen besonders platzsparend anordnen.

In einer besonders bevorzugten Ausführung umfasst das Fadenauge eine Fadenaugenbuchse, durch die die Faserbänder hindurchgeführt werden, bevor sie von den Umlenkrollen umgelenkt werden. Wobei die Fadenaugenbuchse in einem Gestell derart drehbar gelagert ist, dass das Fadenauge um seine Drehachse kippbar ist. Dazu kann die Fadenaugenbuchse einen zylindrischen Teil aufweisen, der koaxial zur Drehachse des Fadenauges angeordnet ist. Mit der Fadenaugenbuchse kann die Tragstruktur des Fadenauges verbunden sein, an der die Führungsrolle und die Umlenkrollen gelagert befestigt sind. So kann über eine Kippung der Fadenaugenbuchse das gesamte Fadenauge gekippt werden.

Unter Kippung des Fadenauges wird eine Drehung um die Drehachse verstanden, wobei die Drehachse in einer Ebene senkrecht zu den Rollen des Fadenauges (Führungsrolle und Umlenkrollen) liegt.

Die Kopplung der Zuführrollen und der Zwischenrollenpaare mit dem Fadenauge kann beispielsweise über eine weitere Tragstruktur erfolgen. Diese weitere Tragstruktur kann an der Fadenaugenbuchse befestigt sein und somit bei einer Kippung des Fadenauges entsprechend mitgekippt werden.

Insbesondere ist die Wickelmaschine derart ausgeführt, dass in der 0°-Position des Fadenauges die jeweiligen Faserbänder nacheinander jeweils zwei Rollen der Zwischenrollenpaare umschlingen, und dass in einer gekippten Position des Fadenauges um einen Winkel α > 10° oder α < -10° ein Teil der Faserbänder nur eine Rolle der Zwischenrollenpaare umschlingt und der andere Teil der Faserbänder nacheinander drei Rollen der Zwischenrollenpaare umschlingt, wobei bevorzugt der eine Teil die Hälfte der Faserbänder und der andere Teil die andere Hälfte der Faserbänder ist. Dadurch ist eine genaue und störungsfreie Führung der Faserbänder gegeben, so dass eine gleichmäßige Zuführung ins Fadenauge und eine hohe Genauigkeit bei der Ablage auf dem Wickelkern gewährleistet sind.

Weiterhin ist es von Vorteil, dass es erste Umlenkrollen und zweite Umlenkrollen gibt, wobei die ersten Umlenkrollen von dem einen Teil der Faserbänder und die zweiten Umlenkrollen von dem anderen Teil der Faserbänder umschlungen werden, und wobei die ersten Umlenkrollen in der 0°-Position des Fadenauges oberhalb der zweiten Umlenkrollen angeordnet sind, und wobei bevorzugt die eine Hälfte der Faserbänder die ersten Umlenkrollen und die andere Hälfte der Faserbänder die zweiten Umlenkrollen umschlingt. So wird verhindert, dass die Faserbänder, insbesondere wenn sie als Towpregs ausgebildet sind, zu lange untereinander in Kontakt kommen und an den Rändern schon verkleben, bevor sie auf den Wickelkern abgelegt werden. Vor allem beim Wickeln der Polkappen eines Drucktanks ist es von Vorteil, da sich das breite Band beim Wickeln dann noch besser an die Kontur des Tanks anpasst.

Zusätzlich ist es von Vorteil, wenn die letzte Umlenkrolle der ersten Umlenkrollen und die letzte Umlenkrolle der zweiten Umlenkrollen, die in Laufrichtung der Faserbänder jeweils unmittelbar vor der Führungsrolle angeordnet sind, so positioniert sind, dass die Laufstrecken der jeweiligen Faserbänder von diesen beiden letzten Umlenkrollen jeweils zur Führungsrolle im Wesentlichen alle gleich lang sind. Dadurch wird eine gleichmäßigere Bildung des breiten, geschlossenen Bandes auf der Führungsrolle erreicht.

In einer weiteren noch verbesserten Ausführung wird die Führungsrolle derart elastisch gelagert, dass die Achse der Führungsrolle unter Zugspannung der Faserbänder um einen Drehpunkt kippen kann, so dass die Führungsrolle nicht mehr ganz parallel zu den Umlenkrollen ausgerichtet ist. Durch diese Nachgiebigkeit in der Lagerung kann die Führungsrolle kleine Ungleichheiten in der Zugverteilung zwischen den Faserbändern etwas ausgleichen, so dass die Anlage weniger fehleranfällig ist.

Zusätzlich bezieht sich die Erfindung auf ein Verfahren zum Wickeln eines rotationssymmetrischen, faserverstärkten Bauteils auf einer Wickelmaschine, wobei verschiedene Lagen aus Faserbändern unter verschiedenen Winkeln β um einen Wickelkern gewickelt werden und dazu ein Fadenauge der Wickelmaschinen um einen Winkel α gekippt wird.

Erfindungsgemäß wird die Aufgabe für das Verfahren durch eine Ausführung gemäß dem nebengeordneten Verfahrensanspruch gelöst. Die Lösung zeichnet sich dadurch aus, dass die Wickelmaschine nach einem der vorherigen Vorrichtungsansprüche ausgeführt ist, wobei die Zuführrollen und die Zwischenrollenpaare mit dem Fadenauge m itgedreht werden, wenn eine Lage von Faserbändern unter einem Winkel ß ungleich 90° gewickelt wird, und damit das Fadenauge auf einen Winkel α abweichend von der 0°-Position eingestellt wird.

Damit lassen sich die zuvor genannten Vorteile verwirklichen.

Anhand von Ausführungsbeispielen werden weitere vorteilhafte Merkmale der Erfindung erläutert unter Bezugnahme auf die Zeichnungen. Die genannten Merkmale können nicht nur in der dargestellten Kombination vorteilhaft umgesetzt werden, sondern auch einzeln untereinander kombiniert werden. Die Figuren zeigen im Einzelnen:
- **Fig.1a**: Wickelmaschine nach dem Stand der Technik (Seitenansicht)
- **Fig.1b**: Detaildarstellung zum Wickeln
- **Fig.2**: Detaildarstellung in Frontansicht
- **Fig.3a,b, c**: Beispiel einer erfindungsgemäßen Wickelmaschine in 0°-Position (Seitenansicht in zwei Perspektiven, mit Detailausschnitt A, Rückansicht)
- **Fig.4a**: Beispiel einer erfindungsgemäßen Wickelmaschine in -70°-Position (Rückansicht)
- **Fig.4b**: Beispiel einer erfindungsgemäßen Wickelmaschine in -70°-Position (Rückansicht)
- **Fig.5**: Seitenansicht eines weiteren Fadenauges einer erfindungsgemäßen Wickelmaschine
- **Fig.6**: Draufsicht noch eines weiteren Fadenauges einer erfindungsgemäßen Wickelmaschine
- **Fig.7**: Frontansicht für höhenverstellbare Rollensegmente
- **Fig.8**: Seitenansicht für höhenverstellbare Rollensegmente

Nachfolgend werden die Figuren detaillierter beschrieben. Gleiche Bezugszahlen bezeichnen gleiche beziehungsweise analoge Bauteile oder Komponenten.

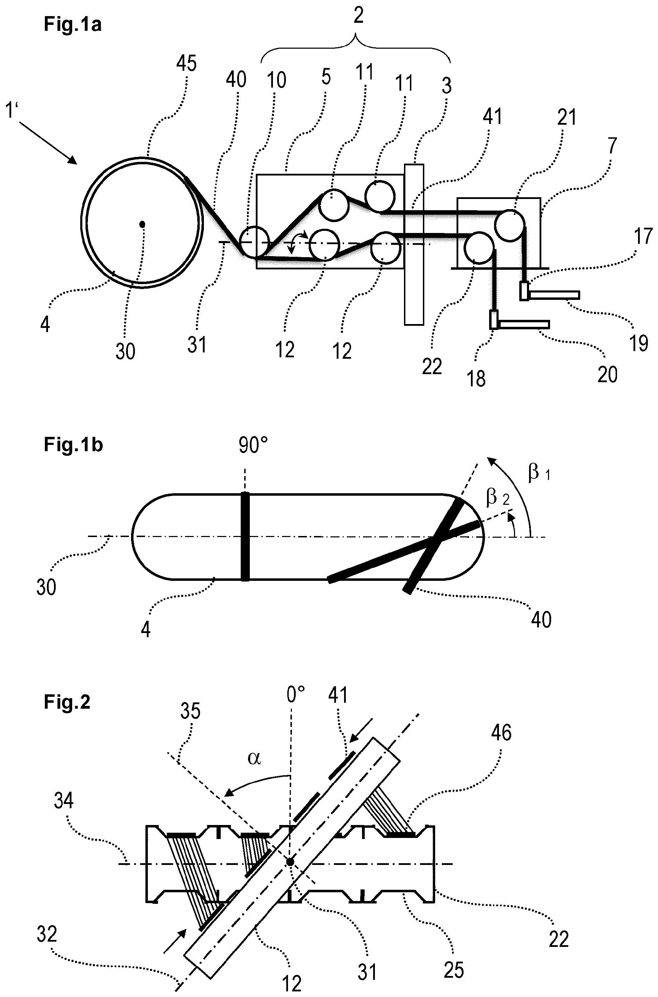

Die **Fig.1a** zeigt eine Wickelmaschine 1' nach dem Stand der Technik. Von den Spulen 19,20 werden die Faserbänder abgewickelt - beispielsweise vier Faserbänder parallel, über die Abwickelrollen 17,18 um 90° umgelenkt und zu den Rollenblöcken 21,22 geführt, die feststehend an der Tragstruktur 7 gelagert sind. Von den Rollenblöcken 21,22 werden die Faserbänder 41 durch das Fadenauge 2 mit der Fadenaugenbuchse 3 geführt. Das Fadenauge 2 umfasst zudem die Führungsrolle 10 und die Umlenkrollen 11,12, wobei das Fadenauge 2 um die Drehachse 31 kippbar ist. Die verschiedenen Faserbänder werden zunächst mit Lücken zwischen den Bändern über die Umlenkrollen geführt, beispielsweise 2 über die ersten Umlenkrollen 11 und zwie über die zweiten Umlenkrollen 12. Erstmals auf der Führungsrolle 10 werden alle Faserbänder zu einem geschlossenen breiten Band nebeneinander zusammengeführt und als gemeinsam (Faserbänder 40) zum Wickelkern 4 geführt und dort aufgewickelt, so dass das gewickelte Bauteil 45 hergestellt wird. Der Wickelkern 4 hat einen Antrieb, so dass er um die Wickelachse 30 rotiert und die Faserbänder 40 entsprechend aufwickelt und nachzieht.

Durch die Kippung des Fadenauges um einen Winkel α können verschiedene Wickelwinkel β erzielt werden, und so Lagen unter verschiedenen Wickelwinkeln β beispielsweise auch sogenannte Helical-Lagen gewickelt werden.

**Fig.1b** veranschaulicht verschiedene Wickelwinkel β. Die Umfangswicklung mit 90° Wickelwinkel wird bei einer Ausrichtung des Fadenauges 2 in 0°-Position hergestellt. Je stärker die Kippung des Fadenauges ist, umso flacher und damit kleiner wird der Wickelwinkel β. So stellt β1 eine sogenannte Low Angle Helical-Lage und β2 eine sogenannte High Angle Helical-Lage dar.

In **Fig.2** wird das Problem, das bei Wickelmaschinen nach dem Stand der Technik auftritt, verdeutlicht. Als Zuführrollen werden sogenannte Rollenblöcke 22 mit Nuten 25 zur Führung der Faserbänder 46 verwendet. Die Achse 34 der Rollenblöcke ist feststehend und wird nicht verändert. Je stärker nun das Fadenauge 2 mit seinen Rollen (Führungsrolle 10 und Umlenkrollen 11,12) gekippt wird (beispielsweise bei Low Angle Helical-Lagen), umso mehr werden die Faserbänder 41 beim Durchlauf durch das Fadenauge verdrillt und umso größer ist der Höhenunterschied zwischen den Rollenblöcken 21,22 und den Umlenkrollen 11,12 an den äußeren Faserbändern 41. Eine Änderung des Winkels α der Positionsebene 35 des Fadenauges führt immer auch zu einer Änderung der Verdrillung und zu einer Änderung des Höhenunterschiedes. So sind keine stabilen Bedingungen für die Führung der Faserbänder 41 gegeben. Der Höhenunterschied führt zudem zu Querkräften auf die Faserbänder 41, so dass die äußeren Faserbänder 41 zur Mitte geschoben werden (Pfeile). Diese wechselnden Bedingungen und die ungenaue Führung aufgrund der Querkräfte führt zu Qualitätsproblemen mit Lücken oder unerwünschten Überlappungen. Ganz besonders bei Verarbeitung von Towpregs als Faserbänder können auch solche kleineren Schwankungen nicht toleriert werden, da das unweigerlich zu gravierenden Qualitätsproblemen führt. Die Fehlstellen im gewickelten Bauteil führen zu geringeren, lokalen Festigkeiten oder müssen durch zusätzliche Lagen kompensiert werden, was dann das Gewicht und den Materialbedarf für die Bauteile erhöht.

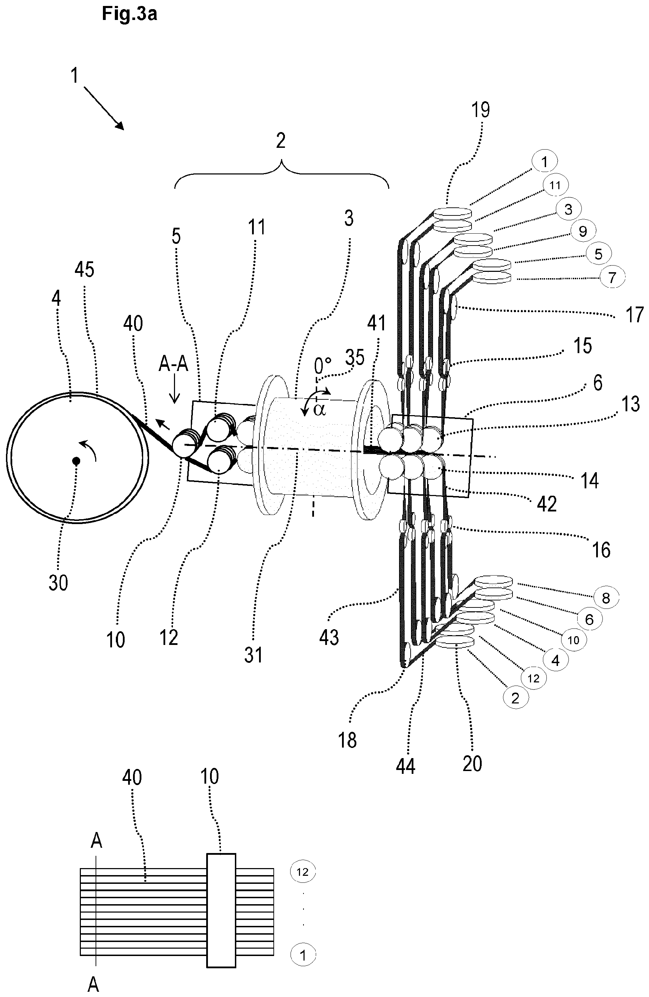

In **Fig.3a** ist eine erfindungsgemäße Ausführung einer Wickelmaschine 1 schematisch dargestellt, die für das gleichzeitige Wickeln von bis zu 12 Faserbändern ausgelegt ist. Die Nummern 1-12 im Kreis bezeichnen die Positionen, wie die Faserbänder später im breiten geschlossenen Band nebeneinander zu liegen kommen. Siehe Ausschnitt A-A. Dabei werden die Hälfte der Faserbänder auf den ersten Spulen 19, die oberhalb des Fadenauges 2 angeordnet sind, bereitgestellt. Und die andere Hälfte der Faserbänder werden auf den zweiten Spulen 20, die unterhalb des Fadenauges 2 angeordnet sind, bereitgestellt. Alternativ können auch alle Spulen 19,20 auf einer Seite des Fadenauges 2 angeordnet sein.

Die Faserbänder sind bevorzugt sogenannte Towpregs, die bereits mit Matrixmaterial vollständig imprägniert sind. Für diese Towpregs ist die Wickelmaschine ausgelegt und besonders gut geeignet. Damit lassen sich dann auch hohe Produktivität durch hohe Abzugsgeschwindigkeit und hohe Qualität gleichzeitig erreichen.

Dargestellt ist die Wickelmaschine 1 mit der Positionsebene des Fadenauges 2 in 0°-Position. Die Faserbänder 44 werden von den Spulen 19,20 abgezogen, auf den Abwickelrollen 17,18 umgelenkt und die Faserbänder 43 werden zu den Zwischenrollenpaaren 15,16 geführt. Auf der Strecke von dort weg werden die Faserbänder 42 um 90° verdrillt und zu den Zuführrollen 13,14 geführt. Die Faserbänder 41 werden ohne irgendeine Verdrillung gerade durch das Fadenauge 2 geführt. Das Fadenauge 2 umfasst die Führungsrolle 10, auf der die Faserbänder 41 zu einem breiten geschlossenen Band zusammengeführt werden, die Umlenkrollen 11,12, die die Faserbänder 41 spreizen, die Tragstruktur 5, an der diese Rollen gelagert sind und die Fadenaugenbuchse 3. In der Darstellung hier sind vier Umlenkrollen 11.12 gezeigt. Es können aber auch mehr Umlenkrollen 11,12 eingesetzt werden. Das Fadenauge 2 ist als Ganzes um die Drehachse 31 um den Winkel α kippbar. Die Zuführrollen 13,14 sind an der Tragstruktur 6 gelagert und mit dem Fadenauge 2 gekoppelt, so dass sich die Zuführrollen 13,14 mitkippen, wenn das Fadenauge 2 gekippt wird. Ebenso sind die Zwischenrollenpaare 15,16 mit dem Fadenauge 2 so gekoppelt, dass sie sich mitkippen, wenn das Fadenauge 2 gekippt wird.

In der gezeigten Ausführung sind die Zwischenrollen 15,16 senkrecht verschoben zu den Zuführrollen 13,14 angeordnet. Die Zuführrollen 13,14 sind parallel zu den Umlenkrollen 11,12 angeordnet.

Von allen Rollen gibt es hier erste Rollen 11,13,15,17 und zweite Rollen 12,14,16,18. Die ersten Rollen 11,13,15,17 führen die Faserbänder, die von den ersten Spulen 19, das heißt von den oben angeordneten Spulen, abgezogen werden. Und die zweiten Rollen führen die Faserbänder, die von den zweiten Spulen 20, das heißt von den unten angeordneten Spulen, abgezogen werden. Die ersten Spulen 11,13,15,17 führen die Faserbänder der ungeraden Positionen jeweils mit einer Lücke dazwischen und die zweiten Spulen 12,14,16,18 führen die Faserbänder der geraden Positionen jeweils mit einer Lücke dazwischen. So können sich die Faserbänder nicht am Rand berühren. Erst auf der Führungsrolle 10 werden die Faserbänder zu einem breiten geschlossenen Band zusammengeführt (Faserbänder 40), wie in Ausschnitt A-A gezeigt. Die Faserbänder 40 werden dann auf den Wickelkern 4 gewickelt, der von einem Antrieb in Rotation versetzt wird. So wird das gewickelte Bauteil 45 hergestellt.

Bevorzugt gibt es eine gerade Anzahl von Spulen 19,20 wobei eine Hälfte die ersten Spulen und die andere Hälfte die zweiten Spulen 20 bildet. Es können aber auch unterschiedliche Anzahlen von ersten und zweiten Spulen verwendet werden. Beispielsweise sechs erste Spulen und fünf zweite Spulen, so dass 11 Faserbänder parallel verarbeitet werden.

Die Wickelmaschine bietet die oben bereits beschriebenen Vorteile. Und sie ist äußerst platzsparend realisierbar.

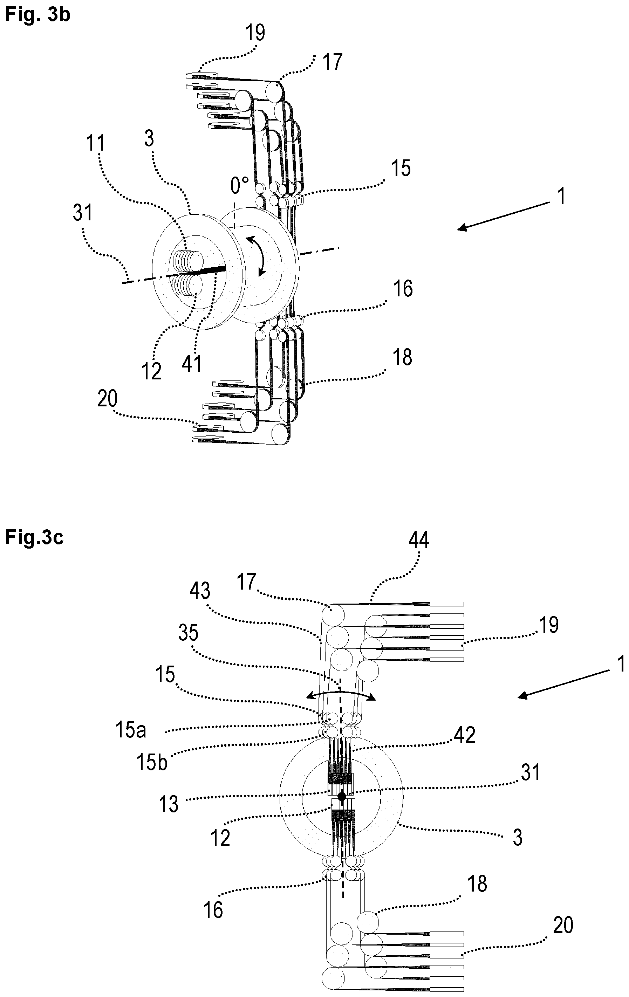

**Fig.3b** zeigt die Wickelmaschine 1 in einer anderen perspektivischen Darstellung. Zur Übersichtlichkeit sind nur die vordersten Umlenkrollen 11,12 dargestellt.

**Fig.3c** ist eine Rückansicht der Wickelmaschine 1, wiederum in 0°-Position. Hier ist zu sehen, dass die Faserbänder beim Umschlingen der Zwischenrollenpaare 15,16 jeweils zwei Rollen der Zwischenrollenpaar S-förmig umschlingen.

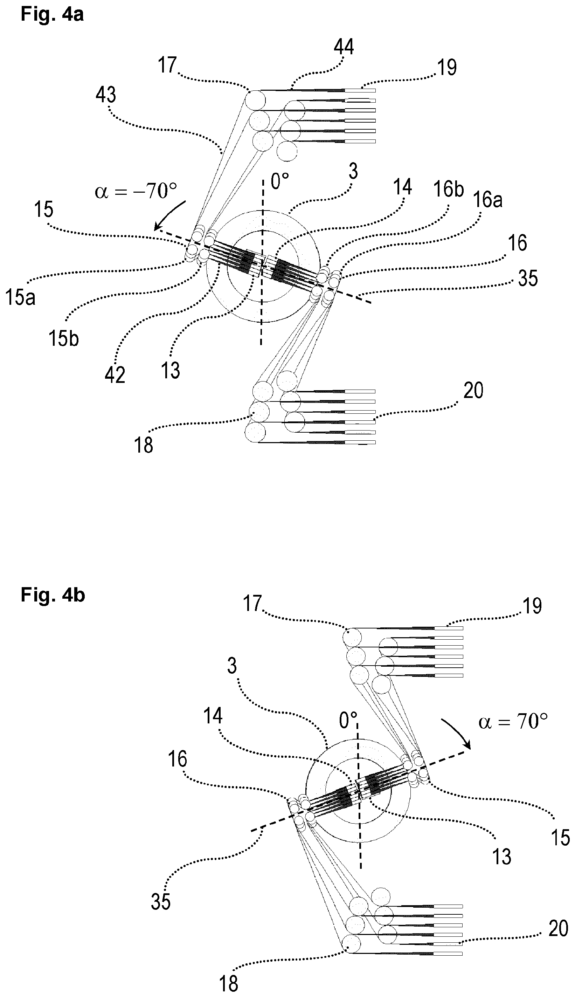

Die **Fig.4a und 4b** zeigen die Rückansicht der Wickelmaschine 1 bei einem Winkel α des Fadenauges 2 von -70° und von +70°. Zu erkennen ist, dass dabei die Laufstrecke der Faserbänder 42 unverändert bleibt. Das ist die Strecke, auf der die Faserbänder 42 um 90° verdrillt werden. Es ändert sich nur die Laufstrecke der Faserbänder 43 zwischen Abwickelrollen 17,18 und den Zwischenrollenpaaren 15,16. Hier ist es unkritisch, da die Faserbänder 43 nicht verdrillt werden und da diese Strecken keinen Einfluss auf das Laufverhalten der Faserbänder 41 durchs Fadenauge 2 haben.

Weiterhin ist zu sehen, dass in diesen Stellungen die Faserbänder beim Umschlingen der Zwischenrollenpaare 15,16 zum Teil nur eine Rolle der Zwischenrollenpaare 15,16 umschlingen (innere Faserbänder) und zum anderen Teil drei Rollen der Zwischenrollenpaare 15,16 umschlingen (äußerer Faserbänder). Dabei teilen sie sich in diesem Fall jeweils hälftig auf. Die erfindungsgemäße Anordnung bietet den Vorteil, dass eine sehr stabile Faserbandführung gewährleistet ist, auch bei großen Winkeln α und dass die Faserbandführung im Faserauge 2 komplett unbeeinflusst von Änderungen des Winkels α oder von der Position der Faserbänder ist. Somit können mehrere Faserbänder parallel und bei hoher Wickelgeschwindigkeit verarbeitet werden. Die Wickelqualität kann bei jedem Winkel α uneingeschränkt gewährleistet werden.

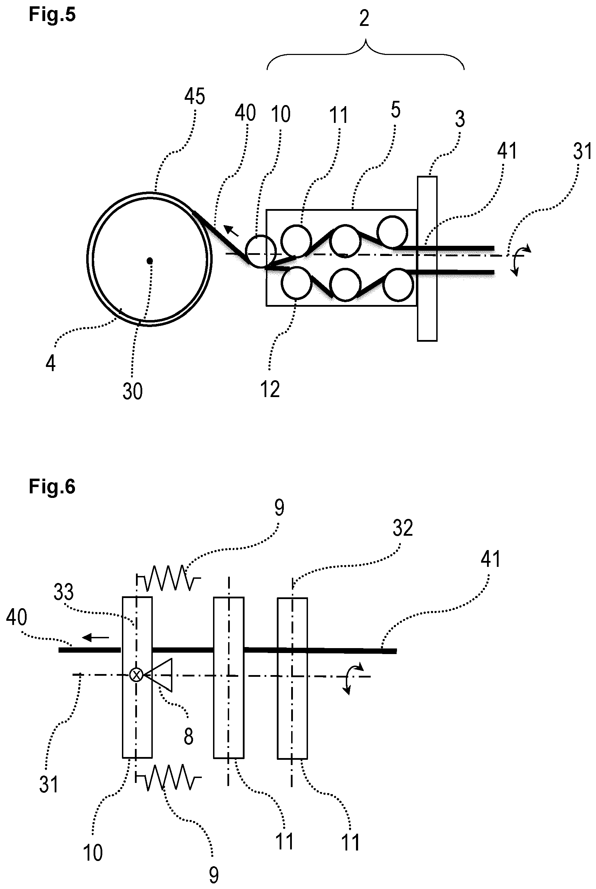

Zudem ist zu erkennen, dass die Wickelmaschine 1 trotz der hohen Anzahl von Spulen 19,20 sehr platzsparend aufgebaut ist
Die Darstellung in **Fig.5** zeigt beispielhaft eine Variante eines Fadenauges 2 für eine erfindungsgemäße Wickelmaschine 1. Dabei sind die Umlenkrollen 11,12 so angeordnet, dass die Laufstrecke der Faserbänder zwischen der jeweils letzten Umlenkrolle 11,12 in Laufrichtung der Faserbänder vor der Führungsrolle 10 und der Führungsrolle 10 jeweils gleich lang sind. Dadurch wird eine gleichmäßige Spreizung der einzelnen Faserbänder 41 erreicht. Hier ist eine Ausführung mit sechs Umlenkrollen 11,12 dargestellt.

Zudem ist es von Vorteil, wenn diese Laufstrecke möglichst kurz gehalten wird, so dass kein Verkleben der Ränder zwischen den einzelnen Faserbändern 41 auftritt. Insbesondere ist diese Laufstrecke zwischen der jeweils letzten Umlenkrolle 11,12 und der Führungsrolle höchstens dreimal so lang wie der Durchmesser der Führungsrollen 10.

In **Fig.6** ist eine Draufsicht der Führungsrollen 10 und zweier erster Umlenkrollen 11 gezeigt. Die Führungsrolle 10 ist so mit einer Aufhängung verbunden, dass ihre Achse 33 so kippbar ist, dass sie bei Kippung nicht mehr exakt parallel zu den Achsen 32 der Umlenkrollen 11,12 angeordnet ist. Die Kippbewegung der Führungsrolle 10 wird über elastische Elemente beispielsweise Federelemente 9 derart begrenzt, dass sie nur bei entsprechend unterschiedlichen Zugspannungen der Faserbänder 40,41 auf der Führungsrolle 10 so ausgelenkt wird, dass die Zugspannungsunterschiede reduziert werden.

Dadurch können kleinere Zugspannungsunterschiede ausgeglichen werden, so dass sie keine Wickelfehler im gewickelten Bauteil verursachen.

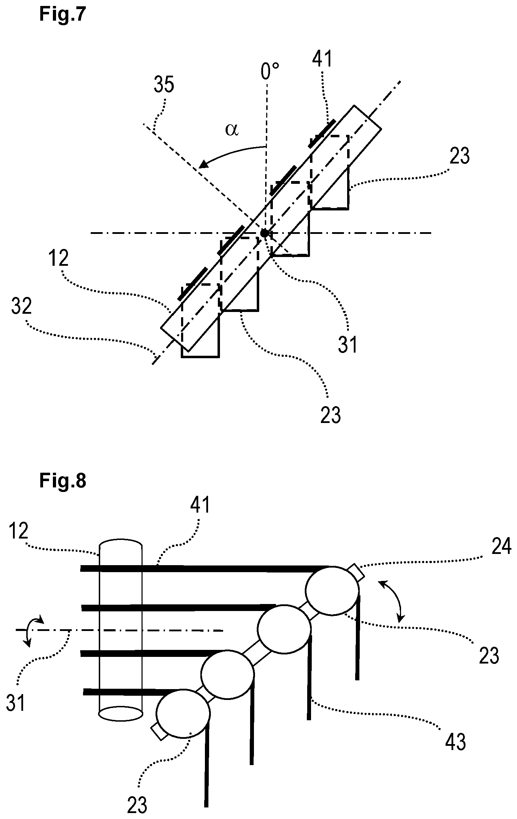

**Fig.7 und 8** stellen eine weitere Idee dar, wie Probleme mit der Wickelqualität bei großen Winkeln α vermieden werden können. Es ist ein Ausschnitt um die Zuführung am Rollenblock, einmal in Frontansicht und einmal in Seitenansicht.

Dabei ist der Rollenblock in Rollensegmente 23 aufgeteilt, so dass jedes Faserband auf einem eigenen Rollensegment 23 läuft. Die Rollensegmente 23 sind am Rollensegment-Träger 24 gelagert, wobei der Rollensegment-Träger 24 so im Winkel einstellbar ist, dass die Rollensegmente 23 entweder auf gleicher Höhe (für Wickeln in 0°-Position) oder in jeweils ansteigender Höhe (Wickeln mit größerem Winkel α) stehen. Durch die Höhenverstellung der Rollensegmente 23, angepasst an den Winkel α, werden die Querkräfte auf die Faserbänder 41 stark reduziert und es wird erreicht, dass alle Faserbänder 41 die gleichen Querkräfte erfahren. So wird ein Zusammenlaufen der äußeren Faserbänder 41 in Richtung Mitte vermieden. Die Wickelqualität - gerade bei Verarbeitung von Towpregs - kann deutlich verbessert werden. Zudem können so auch mehr Faserbänder 41 parallel verarbeitet werden, ohne dass die Qualität darunter leidet.

### Bezugszeichenliste

- 1,1': Wickelmaschine
- 2: Fadenauge
- 3: Fadenaugenbuchse
- 4: Wickelkern
- 5: Tragstruktur Umlenkrollen
- 6: Tragstruktur Zuführrollen
- 7: Tragstruktur für Rollenblock
- 8: Aufhängung
- 9: Federelement
- 10: Führungsrolle
- 11: erste Umlenkrollen
- 12: zweite Umlenkrollen
- 13: erste Zuführrollen
- 14: zweite Zuführrollen
- 15: erste Zwischenrollenpaare
- 15a: Außenrollen der ersten Zwischenrollenpaare
- 15b: Innenrollen der ersten Zwischenrollenpaare
- 16: zweite Zwischenrollenpaare
- 16a: Außenrollen der zweiten Zwischenrollenpaare
- 16b: Innenrollen der zweiten Zwischenrollenpaare
- 17: erste Abwickelrollen
- 18: zweite Abwickelrollen
- 19: erste Spulen
- 20: zweite Spulen
- 21: erster Rollenblock
- 22: zweiter Rollenblock
- 23: Rollensegmente
- 24: Rollensegment-Träger
- 25: Nut im Rollenblock
- 30: Wickelachse
- 31: Drehachse des Fadenauges
- 32: Achsen der Umlenkrollen
- 33: Achse der Führungsrolle
- 34: Achsen der Rollenblöcke
- 35: Positionsebene des Fadenauges

- 40: Faserbänder zum Wickelkern
- 41: Faserbänder im Fadenauge
- 42: Faserbänder vor Zuführrollen
- 43: Faserbänder nach Abwickelrollen
- 44: Faserbänder nach Spule
- 45: gewickeltes Bauteil
- 46: Faserbänder auf Rollenblock

- ①-⑫: Spulen-Positionen/ Faserband-Positionen

- α: Winkel des Fadenauges
- β: Wickelwinkel

## Patentansprüche

1. Wickelmaschine (1) zum Herstellen eines Bauteils (45) aus faserverstärktem Kunststoff durch gleichzeitiges Wickeln von mehreren Faserbändern (40,41,42,43,44) auf einen Wickelkern (4),
umfassend
- einen Wickelkern (4) mit Antrieb, der den Wickelkern (4) in Rotation versetzen kann,
- ein Fadenauge (2), welches mehrere Umlenkrollen (11,12), eine Führungsrolle (10) zum Führen der Faserbänder (40,41,42,43,44) vor dem Wickeln auf den Wickelkern (4), sowie eine Tragstruktur (5) umfasst, wobei das Fadenauge (2) mit seinen Rollen (10,11,12) derart um eine Drehachse (31) kippbar ist, dass die Positionsebene (35) des Fadenauges im Winkel α einstellbar ist, um damit den Wickelwinkel β, unter dem die Faserbänder (40,41,42,43,44) auf den Wickelkern (4) gewickelt werden, verändern zu können,
- mehrere Zuführrollen (13,14), die in Laufrichtung der Faserbänder (40,41,42,43,44) vor dem Fadenauge (2) angeordnet sind, und die die Faserbänder (40,41,42,43,44) umlenken und zum Fadenauge (2) führen,
- mehrere Spulen (19,20), von denen die Faserbänder (40,41,42,43,44) abgewickelt werden,
**dadurch gekennzeichnet,**
**dass** zusätzlich Zwischenrollenpaare (15,16) vorhanden sind, die in Laufrichtung der Faserbänder (40,41,42,43,44) vor den Zuführrollen (13,14) angeordnet sind und deren Achsen nicht parallel zu den Achsen der Zuführrollen (15,16) ausgerichtet sind, wobei je Faserband (40,41,42,43,44) jeweils ein Zwischenrollenpaar (15,16) vorgesehen ist, und wobei die Zuführrollen (13,14) und die Zwischenrollenpaare (15,16) so mit dem Fadenauge (2) verbunden sind, dass sie um die Drehachse (31) mitkippen, wenn der Winkel α des Fadenauges verändert wird, wobei die Achsen der Zuführrollen (15,16) dabei immer parallel zu den Achsen der Umlenkrollen (11,12) bleiben.

2. Wickelmaschine (1) nach Anspruch 1
**dadurch gekennzeichnet,**
**dass** sie für Faserbänder (40,41,42,43,44) ausgelegt ist, welche sogenannte Towpregs sind, die von den Spulen bereits vollständig mit Matrixmaterial imprägniert abgewickelt werden.

3. Wickelmaschine (1) nach einem der Ansprüche 1 oder 2
**dadurch gekennzeichnet,**
**dass** sie so ausgeführt, dass sie mindestens 8, bevorzugt mindestens 10, besonders bevorzugt mindestens 12 Faserbänder (40,41,42,43,44) parallel verarbeiten und in einem breiten Band auf den Wickelkern (4) gleichzeitig wickeln kann.

4. Wickelmaschine (1) nach einem der vorherigen Ansprüche
**dadurch gekennzeichnet,**
**dass** die Achsen der Zwischenrollenpaare (15,16) parallel zur Drehachse (31) des Fadenauges angeordnet sind.

5. Wickelmaschine (1) nach einem der vorherigen Ansprüche
**dadurch gekennzeichnet,**
**dass** das Fadenauge (2) mindestens in einem Winkelbereich von +70° bis -70° um die Drehachse (31) herum gekippt werden kann.

6. Wickelmaschine (1) nach einem der vorherigen Ansprüche
**dadurch gekennzeichnet,**
**dass** einige der Spulen (19,20) oberhalb und die anderen Spulen (19,20) unterhalb des Fadenauges (2) angeordnet sind, bevorzugt dass die eine Hälfte der Spulen (19,20) oberhalb und die andere Hälfte der Spulen (19,20) unterhalb des Fadenauges (2) angeordnet sind.

7. Wickelmaschine (1) nach Anspruch 6
**dadurch gekennzeichnet,**
**dass** es erste Zuführrollen (13) und zweite Zuführrollen (14) gibt, wobei die ersten Zuführrollen (13) die Faserbänder (40,41,42,43,44) von den Spulen (19) oberhalb des Fadenauges (2) umlenken und die zweiten Zuführrollen (14) die Faserbänder (40,41,42,43,44) von den Spulen (20) unterhalb des Fadenauges (2) umlenken, und wobei die ersten Zuführrollen (13) in der 0°-Position des Fadenauges (2) oberhalb der zweiten Zuführrollen (14) angeordnet sind.

8. Wickelmaschine (1) nach einem der vorherigen Ansprüche
**dadurch gekennzeichnet,**
**dass** das Fadenauge (2) eine Fadenaugenbuchse (3) umfasst, durch die die Faserbänder (40,41,42,43,44) hindurchgeführt werden, bevor sie von den Umlenkrollen (11,12) umgelenkt werden, wobei die Fadenaugenbuchse (3) in einem Gestell derart drehbar gelagert ist, dass das Fadenauge (2) um die Drehachse (31) kippbar ist.

9. Wickelmaschine (1) nach einem der vorherigen Ansprüche
**dadurch gekennzeichnet,**
**dass** sie derart ausgeführt ist, dass in der 0°-Position des Fadenauges (2) die jeweiligen Faserbänder (40,41,42,43,44) nacheinander jeweils zwei Rollen der Zwischenrollenpaare (15,16) umschlingen, und dass in einer gekippten Position des Fadenauges (2) um einen Winkel α > 10° oder α < -10° ein Teil der Faserbänder (40,41,42,43,44) nur eine Rolle der Zwischenrollenpaare umschlingt und der andere Teil der Faserbänder (40,41,42,43,44) nacheinander drei Rollen der Zwischenrollenpaare (15,16) umschlingt, wobei bevorzugt der eine Teil die Hälfte der Faserbänder (40,41,42,43,44) und der andere Teil die andere Hälfte der Faserbänder (40,41,42,43,44) ist.

10. Wickelmaschine (1) nach einem der vorherigen Ansprüche
**dadurch gekennzeichnet,**
**dass** es erste Umlenkrollen (11) und zweite Umlenkrollen (12) gibt, wobei die ersten Umlenkrollen (11) von dem einen Teil der Faserbänder (40,41,42,43,44) und die zweiten Umlenkrollen von dem anderen Teil der Faserbänder (40,41,42,43,44) umschlungen werden, und wobei die ersten Umlenkrollen (11) in der 0°-Position des Fadenauges (2) oberhalb der zweiten Umlenkrollen (12) angeordnet sind, und wobei bevorzugt die eine Hälfte der Faserbänder (40,41,42,43,44) die ersten Umlenkrollen (11) und die andere Hälfte der Faserbänder (40,41,42,43,44) die zweiten Umlenkrollen (12) umschlingt.

11. Wickelmaschine (1) nach Anspruch 10
**dadurch gekennzeichnet,**
**dass** die letzte Umlenkrolle der ersten Umlenkrollen (11) und die letzte Umlenkrolle der zweiten Umlenkrollen (12), die in Laufrichtung der Faserbänder (40,41,42,43,44) jeweils unmittelbar vor der Führungsrolle (10) angeordnet sind, so positioniert sind, dass die Laufstrecken der jeweiligen Faserbänder (40,41,42,43,44) von diesen beiden letzten Umlenkrollen (11,12) jeweils zur Führungsrolle (10) im Wesentlichen alle gleich lang sind.

12. Wickelmaschine (1) nach einem der vorherigen Ansprüche
**dadurch gekennzeichnet,**
**dass** die Führungsrolle (10) derart elastisch gelagert ist, dass die Achse der Führungsrolle (33) unter Zugspannung der Faserbänder (40,41,42,43,44) um einen Drehpunkt kippen kann, so dass die Führungsrolle (10) nicht mehr ganz parallel zu den Umlenkrollen (11,12) ausgerichtet ist.

13. Verfahren zum Wickeln eines rotationssymmetrischen, faserverstärkten Bauteils (45) auf einer Wickelmaschine (1), wobei verschiedene Lagen aus Faserbändern unter verschiedenen Winkeln β um einen Wickelkern (4) gewickelt werden und dazu ein Fadenauge (2) der Wickelmaschinen um einen Winkel α gekippt wird,
**dadurch gekennzeichnet,**
**dass** die Wickelmaschine (1) nach einem der vorherigen Ansprüche ausgeführt ist, wobei die Zuführrollen (13,14) und die Zwischenrollenpaare (15,16) mit dem Fadenauge (2) mitgedreht werden, wenn eine Lage von Faserbändern (40,41,42,43,44) unter einem Winkel β ungleich 90° gewickelt wird, und damit das Fadenauge (2) auf einen Winkel α abweichend von der 0°-Position eingestellt wird.

## Claims

1. Winding machine (1) for producing a component (45) made of fibre-reinforced plastic by simultaneously winding a plurality of fibre bands (40, 41, 42, 43, 44) onto a winding core (4),
comprising
- a winding core (4) with a drive capable of rotating the winding core (4),
- a thread eyelet (2) comprising a plurality of deflection rollers (11, 12), a guide roller (10) for guiding the fibre bands (40, 41, 42, 43, 44) prior to winding onto the winding core (4), and a support structure (5), wherein the thread eyelet (2), with its rollers (10, 11, 12), is tiltable about an axis of rotation (31) such that the positional plane (35) of the thread eyelet is adjustable at an angle α, thereby enabling the winding angle β, at which the fibre bands (40, 41, 42, 43, 44) are wound onto the winding core (4), to be varied,
- a plurality of feed rollers (13, 14) arranged upstream of the thread eyelet (2) in the direction of travel of the fibre bands (40, 41, 42, 43, 44), which deflect the fibre bands (40, 41, 42, 43, 44) and guide them to the thread eyelet (2),
- a plurality of spools (19, 20) from which the fibre bands (40, 41, 42, 43, 44) are unwound,
**characterized in that**
additional pairs of intermediate rollers (15, 16) are present, which are arranged upstream of the feed rollers (13, 14) in the direction of travel of the fibre bands (40, 41, 42, 43, 44) and the axes of which are not aligned parallel to the axes of the feed rollers (15, 16), wherein a pair of intermediate rollers (15, 16) is provided for each fibre band (40, 41, 42, 43, 44), and wherein the feed rollers (13, 14) and the pairs of intermediate rollers (15, 16) are connected to the thread eyelet (2) in such a way that they tilt along with it about the axis of rotation (31) if the angle α of the thread eyelet is changed, with the axes of the feed rollers (15, 16) remaining parallel to the axes of the deflection rollers (11, 12) at all times.

2. Winding machine (1) according to Claim 1,
**characterized in that**
it is designed for fibre bands (40, 41, 42, 43, 44) that are so-called towpregs, which are unwound from the spools already fully impregnated with matrix material.

3. Winding machine (1) according to one of Claims 1 or 2,
**characterized in that**
it is embodied in such a way that it can process at least 8, preferably at least 10, particularly preferably at least 12 fibre bands (40, 41, 42, 43, 44) in parallel and simultaneously wind them onto the winding core (4) in a wide band.

4. Winding machine (1) according to one of the preceding claims,
**characterized in that**
the axes of the pairs of intermediate rollers (15, 16) are arranged parallel to the axis of rotation (31) of the thread eyelet.

5. Winding machine (1) according to one of the preceding claims,
**characterized in that**
the thread eyelet (2) can be tilted at least within an angular range of +70° to -70° about the axis of rotation (31).

6. Winding machine (1) according to one of the preceding claims,
**characterized in that**
some of the spools (19, 20) are arranged above and the other spools (19, 20) below the thread eyelet (2), preferably such that one half of the spools (19, 20) are arranged above and the other half of the spools (19, 20) below the thread eyelet (2).

7. Winding machine (1) according to Claim 6,
**characterized in that**
there are first feed rollers (13) and second feed rollers (14), wherein the first feed rollers (13) deflect the fibre bands (40, 41, 42, 43, 44) from the spools (19) above the thread eyelet (2) and the second feed rollers (14) deflect the fibre bands (40, 41, 42, 43, 44) from the spools (20) below the thread eyelet (2), and wherein the first feed rollers (13) are arranged above the second feed rollers (14) in the 0° position of the thread eyelet (2).

8. Winding machine (1) according to one of the preceding claims,
**characterized in that**
the thread eyelet (2) comprises a thread-eyelet bushing (3) through which the fibre bands (40, 41, 42, 43, 44) are passed before being deflected by the deflection rollers (11, 12), wherein the thread-eyelet bushing (3) is rotatably mounted in a frame such that the thread eyelet (2) is tiltable about the axis of rotation (31).

9. Winding machine (1) according to one of the preceding claims,
**characterized in that**
it is embodied such that, in the 0° position of the thread eyelet (2), the respective fibre bands (40, 41, 42, 43, 44) successively wrap around two rollers of the pairs of intermediate rollers (15, 16) each, and that in a tilted position of the thread eyelet (2) at an angle α > 10° or α < -10°, a portion of the fibre bands (40, 41, 42, 43, 44) wraps around only one roller of the pairs of intermediate rollers and the other portion of the fibre bands (40, 41, 42, 43, 44) successively wraps around three rollers of the pairs of intermediate rollers (15, 16), wherein the one portion preferably constitutes half of the fibre bands (40, 41, 42, 43, 44) and the other portion constitutes the other half of the fibre bands (40, 41, 42, 43, 44).

10. Winding machine (1) according to one of the preceding claims,
**characterized in that**
there are first deflection rollers (11) and second deflection rollers (12), wherein the first deflection rollers (11) are wrapped around by one portion of the fibre bands (40, 41, 42, 43, 44) and the second deflection rollers are wrapped around by the other portion of the fibre bands (40, 41, 42, 43, 44), and wherein the first deflection rollers (11) are arranged above the second deflection rollers (12) in the 0° position of the thread eyelet (2), and wherein preferably one half of the fibre bands (40, 41, 42, 43, 44) wraps around the first deflection rollers (11) and the other half of the fibre bands (40, 41, 42, 43, 44) wraps around the second deflection rollers (12).

11. Winding machine (1) according to Claim 10,
**characterized in that**
the last deflection roller of the first deflection rollers (11) and the last deflection roller of the second deflection rollers (12), which are arranged immediately upstream of the guide roller (10) in the direction of travel of the fibre bands (40, 41, 42, 43, 44), are positioned such that the running paths of the respective fibre bands (40, 41, 42, 43, 44) from these two last deflection rollers (11, 12) in each case to the guide roller (10) are substantially equal in length.

12. Winding machine (1) according to one of the preceding claims,
**characterized in that**
the guide roller (10) is mounted elastically such that the axis of the guide roller (33) can tilt about a pivot point under the tensile stress of the fibre bands (40, 41, 42, 43, 44), with the result that the guide roller (10) is no longer aligned exactly parallel to the deflection rollers (11, 12).

13. Method for winding a rotationally symmetrical, fibre-reinforced component (45) on a winding machine (1), wherein various layers of fibre bands are wound around a winding core (4) at different angles β, and for this purpose, a thread eyelet (2) of the winding machine is tilted by an angle α,
**characterized in that**
the winding machine (1) is embodied according to one of the preceding claims, wherein the feed rollers (13, 14) and the pairs of intermediate rollers (15, 16) are rotated with the thread eyelet (2) if a layer of fibre bands (40, 41, 42, 43, 44) is wound at an angle β not equal to 90°, and thus the thread eyelet (2) is set to an angle α deviating from the 0° position.

## Revendications

1. Machine d'enroulement (1) pour la fabrication d'un composant (45) en matériau synthétique renforcé par des fibres par enroulement simultané de plusieurs bandes de fibres (40, 41, 42, 43, 44) sur un noyau d'enroulement (4),
comprenant
- un noyau d'enroulement (4) pourvu d'un entraînement qui peut mettre le noyau d'enroulement (4) en rotation,
- un œillet guide-fil (2), qui comprend plusieurs rouleaux de déviation (11, 12), un rouleau de guidage (10) pour le guidage des bandes de fibres (40, 41, 42, 43, 44) avant l'enroulement sur le noyau d'enroulement (4) ainsi qu'une structure support (5), l'œillet guide-fil (2) pouvant basculer, avec ses rouleaux (10, 11, 12), autour d'un axe de rotation (31) de telle sorte que le plan de position (35) de l'œillet guide-fil est réglable selon l'angle α afin de pouvoir modifier ainsi l'angle d'enroulement β selon lequel les bandes de fibres (40, 41, 42, 43, 44) sont enroulées sur le noyau d'enroulement (4),
- plusieurs rouleaux d'alimentation (13, 14) qui sont agencés, dans le sens de déplacement des bandes de fibres (40, 41, 42, 43, 44), en amont de l'œillet guide-fil (2) et qui dévient les bandes de fibres (40, 41, 42, 43, 44) et les guident vers l'œillet guide-fil (2),
- plusieurs bobines (19, 20), dont les bandes de fibres (40, 41, 42, 43, 44) sont déroulées,
**caractérisée**
**en ce qu'**en plus, des paires de rouleaux intermédiaires (15, 16) sont présentes, qui sont agencées, dans le sens de déplacement des bandes de fibres (40, 41, 42, 43, 44), en amont des rouleaux d'alimentation (13, 14) et dont les axes ne sont pas orientés parallèlement aux axes des rouleaux d'alimentation (15, 16), à chaque fois une paire de rouleaux intermédiaires (15, 16) étant prévue par bande de fibres (40, 41, 42, 43, 44) et les rouleaux d'alimentation (13, 14) et les paires de rouleaux intermédiaires (15, 16) étant reliés à l'œillet guide-fil (2) de telle sorte qu'ils basculent conjointement autour de l'axe de rotation (31) lorsque l'angle α de l'œillet guide-fil est modifié, les axes des rouleaux d'alimentation (15, 16) restant alors toujours parallèles aux axes des rouleaux de déviation (11, 12).

2. Machine d'enroulement (1) selon la revendication 1, **caractérisée**
**en ce qu'**elle est conçue pour des bandes de fibres (40, 41, 42, 43, 44), qui sont ce qu'on appelle des towpregs, qui sont déroulées des bobines dans un état déjà complètement imprégné du matériau de matrice.

3. Machine d'enroulement (1) selon l'une des revendications 1 ou 2,
**caractérisée**
**en ce qu'**elle est conçue de telle sorte qu'elle peut traiter en parallèle au moins 8, de préférence au moins 10, de manière particulièrement préférée au moins 12 bandes de fibres (40, 41, 42, 43, 44) et les enrouler simultanément en une bande large sur le noyau de roulement (4).

4. Machine d'enroulement (1) selon l'une des revendications précédentes,
**caractérisée**
**en ce que** les axes des paires de rouleaux intermédiaires (15, 16) sont agencés parallèlement à l'axe de rotation (31) de l'œillet guide-fil.

5. Machine d'enroulement (1) selon l'une des revendications précédentes,
**caractérisée**
**en ce que** l'œillet guide-fil (2) peut être basculé au moins dans une plage angulaire de +70° à -70° autour de l'axe de rotation (31).

6. Machine d'enroulement (1) selon l'une des revendications précédentes,
**caractérisée**
**en ce que** quelques-unes des bobines (19, 20) sont agencées au-dessus et les autres bobines (19, 20) sont agencées sous l'œillet guide-fil (2), de préférence en ce qu'une moitié des bobines (19, 20) est agencée au-dessus et l'autre moitié des bobines (19, 20) est agencée sous l'œillet guide-fil (2).

7. Machine d'enroulement (1) selon la revendication 6, **caractérisée**
**en ce qu'**il existe des premiers rouleaux d'alimentation (13) et des seconds rouleaux d'alimentation (14), les premiers rouleaux d'alimentation (13) déviant les bandes de fibres (40, 41, 42, 43, 44) des bobines (19) au-dessus de l'œillet guide-fil (2) et les seconds rouleaux d'alimentation (14) déviant les bandes de fibres (40, 41, 42, 43, 44) des bobines (20) sous l'œillet guide-fil (2) et les premiers rouleaux d'alimentation (13) étant agencés, dans la position 0° de l'œillet guide-fil (2), au-dessus des seconds rouleaux d'alimentation (14).

8. Machine d'enroulement (1) selon l'une des revendications précédentes,
**caractérisée**
**en ce que** l'œillet guide-fil (2) comprend une douille (3) d'œillet guide-fil à travers laquelle les bandes de fibres (40, 41, 42, 43, 44) sont guidées avant d'être déviées par les rouleaux de déviation (11, 12), la douille (3) d'œillet guide-fil étant logée de manière rotative dans un bâti de telle sorte que l'œillet guide-fil (2) peut basculer autour de l'axe de rotation (31).

9. Machine d'enroulement (1) selon l'une des revendications précédentes,
**caractérisée**
**en ce qu'**elle est conçue de telle sorte que, dans la position 0° de l'œillet guide-fil (2), les bandes de fibres respectives (40, 41, 42, 43, 44) s'enroulent successivement à chaque fois autour de deux rouleaux des paires de rouleaux intermédiaires (15, 16) et en ce que, dans une position basculée de l'œillet guide-fil (2) d'un angle α > 10° ou α < -10°, une partie des bandes de fibres (40, 41, 42, 43, 44) s'enroule autour d'un seul rouleau de la paire de rouleaux intermédiaires et l'autre partie des bandes de fibres (40, 41, 42, 43, 44) s'enroule successivement autour de trois rouleaux des paires de rouleaux intermédiaires (15, 16), de préférence l'une partie étant la moitié des bandes de fibres (40, 41, 42, 43, 44) et l'autre partie étant l'autre moitié des bandes de fibres (40, 41, 42, 43, 44).

10. Machine d'enroulement (1) selon l'une des revendications précédentes,
**caractérisée**
**en ce qu'**il existe des premiers rouleaux de déviation (11) et des seconds rouleaux de déviation (12), les premiers rouleaux de déviation (11) étant enroulés par une partie des bandes de fibres (40, 41, 42, 43, 44) et les seconds rouleaux de déviation étant enroulés par l'autre partie des bandes de fibres (40, 41, 42, 43, 44) et les premiers rouleaux de déviation (11), dans la position 0° de l'œillet guide-fil (2), étant agencés au-dessus des seconds rouleaux de déviation (12) et, de préférence, l'une moitié des bandes de fibres (40, 41, 42, 43, 44) s'enroulant autour des premiers rouleaux de déviation (11) et l'autre moitié des bandes de fibres (40, 41, 42, 43, 44) s'enroulant autour des seconds rouleaux de déviation (12).

11. Machine d'enroulement (1) selon la revendication 10, **caractérisée**
**en ce que** le dernier rouleau de déviation des premiers rouleaux de déviation (11) et le dernier rouleau de déviation des seconds rouleaux de déviation (12), qui sont agencés, dans le sens de déplacement des bandes de fibres (40, 41, 42, 43, 44), à chaque fois directement en amont du rouleau de guidage (10), sont positionnés de telle sorte que les distances de déplacement des bandes de fibres (40, 41, 42, 43, 44) respectives depuis ces deux derniers rouleaux de déviation (11, 12) à chaque fois aux rouleaux de guidage (10) sont sensiblement toutes de la même longueur.

12. Machine d'enroulement (1) selon l'une des revendications précédentes,
**caractérisée**
**en ce que** le rouleau de guidage (10) est logé de manière élastique de telle sorte que l'axe du rouleau de guidage (33) peut basculer autour d'un point de rotation sous la contrainte de traction des bandes de fibres (40, 41, 42, 43, 44) de telle sorte que le rouleau de guidage (10) n'est plus orienté de manière totalement parallèle au rouleau de déviation (11, 12).

13. Procédé d'enroulement d'un composant (45) renforcé par des fibres à symétrie de rotation sur une machine d'enroulement (1), différentes couches de bandes de fibres étant enroulées selon différents angles β autour d'un noyau d'enroulement (4) et un œillet guide-fil (2) de la machine d'enroulement étant basculé à cette fin d'un angle α,
**caractérisé**
**en ce que** la machine d'enroulement (1) est conçue selon l'une des revendications précédentes, les rouleaux d'alimentation (13, 14) et les paires de rouleaux intermédiaires (15, 16) étant entraînés en rotation conjointement avec l'œillet guide-fil (2) lorsqu'une couche de bandes de fibres (40, 41, 42, 43, 44) est enroulée selon un angle β différent de 90° et l'œillet guide-fil (2) est donc réglé à un angle α s'écartant de la position 0°.
